# EUROPEAN PATENT APPLICATION

(11) **EP 3 103 768 A1**
(43) Date of publication of application: **14.12.2016**
(21) Application number: 15275150.9
(22) Date of filing: 09.06.2015
(51) Int. Cl.: C01B 31/04, B82Y 30/00, B82Y 40/00, C09D 11/52

(54) **REDUCED GRAPHENE OXIDE, ITS DERIVATIVES, PREPARATION METHOD AND INK THEREOF**

(71) Applicant: Nokia Technologies Oy, 02610 Espoo (FI)
(72) Inventor: Zarra, Salvatore, Cambridge, CB4 3QF (GB)
(74) Representative: Potter Clarkson LLP

(57) **Abstract**

The present disclosure relates to the field of reduced graphene oxide, reduced graphene oxide derivatives and associated apparatus. In particular, the disclosure concerns a process for the preparation of reduced graphene oxide or a reduced graphene oxide derivative and associated apparatus.

## Description

The present disclosure relates to the field of reduced graphene oxide, reduced graphene oxide derivatives and associated apparatus. In particular, the disclosure concerns a process for the preparation of reduced graphene oxide or a reduced graphene oxide derivative and associated apparatus.

Graphene has attracted great interest for its excellent mechanical, electrical, thermal and optical properties. It is typically produced by micro-mechanical exfoliation of highly ordered pyrolytic graphite, epitaxial growth, chemical vapour deposition, and by the reduction of graphene oxide.

Graphene oxide (GO) has two important characteristics: (1) it is typically produced using inexpensive graphite as the raw material by cost-effective methods in a high yield; and (2) it is typically highly hydrophilic and can form stable aqueous colloids that facilitates the assembly of macroscopic structures. Both of these characteristics are important to large scale uses of graphene.

Reduction of GO (rGO) partly restores the structure and properties of graphene. However, rGO contains defects created by the reduction process. These defects can be highly detrimental to the electrical conductivity of rGO. Also the removal of oxygen containing groups during the reduction process typically renders the obtained rGO not easily dispersible. This is a disadvantage when rGO is used in printable inks, and a surfactant is often required to aid the dispersibility of rGO. The presence of a surfactant often affects the properties of the printed material, thus it is desirable to be able to provide a printable ink comprising rGO that does not require the addition of a surfactant.

One or more aspects/embodiments of the present disclosure may or may not address one or more of these issues.

The listing or discussion of a prior-published document or any background in this specification should not necessarily be taken as an acknowledgement that the document or background is part of the state of the art or is common general knowledge.

The present invention provides a process for preparing a reduced graphene oxide or a reduced graphene oxide derivative, which process comprises reducing graphene oxide, or a graphene oxide derivative, with a reducing agent, wherein the process is conducted at a pH of less than about 4.

Performing the process of the invention at such a pH has surprisingly been found to result in a dispersible, conductive reduced graphene oxide or reduced graphene oxide derivative thereof. Contrary to teaching in the art, the use of a pH of less than about 4 in combination with a reducing agent effective at said pH can lead to advantageous reduced graphene oxide or reduced graphene oxide derivatives.

In an aspect of the process of the invention, the process further comprises the step of forming the graphene oxide derivative prior to reduction by reacting graphene oxide with a functionalising compound.

The present invention also provides a process for preparing a reduced graphene oxide derivative comprising the steps of:
(i) reacting graphene oxide with a functionalising compound to provide a graphene oxide derivative; and
(ii) reacting the graphene oxide derivative with a reducing agent, such as ascorbic acid, to provide a reduced graphene oxide derivative.

In the process of the invention, the graphene oxide, or graphene oxide derivative is typically present at a concentration of from about 0.1 to about 50 mg/mL, or from about 1 to about 30 mg/mL, or from about 5 to about 20 mg/mL, such as from about 10 to about 15 mg/mL.

In the process of the invention, the ratio of graphene oxide, or graphene oxide derivative to reducing gent is typically from about 20:1 to about 1:10, or from about 10:1 to about 1:2, or from about 5:1 to about 1:1.

In the process of the invention, the reducing agent is typically an organic compound, such as an organic acid. In one aspect, it is preferred that the reducing agent is ascorbic acid, or a salt, solvate or derivative thereof. In a further aspect, the reducing agent is citric acid, or a salt, solvate or derivative thereof.

In a preferred aspect of the invention, the process is conducted at a pH of less than about 1 using ascorbic acid as the reducing agent. In a preferred aspect of the invention, the process is conducted at a pH of about 0 using ascorbic acid or citric acid as the reducing agent.

By the term "graphene oxide (GO)" we mean any oxidised form of graphene; for example, graphene oxide that has been prepared by oxidising and exfoliating graphite. As used herein, the term graphene oxide encompasses graphene oxide that may comprise impurities remaining from the process used to prepare the graphene oxide and/or the processes described herein. The graphene oxide may also comprise solvent and/or suspended or dissolved compounds present during the preparation of the graphene oxide.

By the term "graphene oxide derivative" we mean any form of graphene oxide wherein at least 10%, such as at least 40% or at least 60% of the oxygen containing groups of the graphene oxide have been covalently functionalised, for example, through reaction of hydroxyl groups present on GO and nitrile or amine containing functionalising compounds such as through the Pinner reaction.

The functionalising compound is a compound that may covalently react with the hydroxyl groups present on the GO. Alternatively, the functionalising compound is a compound that may covalently react with epoxide or carboxylic acid groups present on the GO or with the aromatic basal plane of GO. Typically, the functionalising compound is a compound of formula I,

R-X (I)

wherein R represents C₁₋₁₂ alkyl, C₂₋₁₂ alkenyl, C₂₋₁₂ alkynyl, heteroalkyl, heteroalkenyl, heteroalkynyl, cycloalkyl, heterocycloalkyl, aryl, heteroaryl, each of which is substituted or un-substituted;
X represents -CN, -N(R^{a})R^{b}, -N=C=O, a dienophile, a silane, or a boronic acid; R^{a} and R^{b} independently represent hydrogen or a C₁₋₆ alkyl group.

Alternatively, the compound of formula I is a polymer containing one or more X substituents, wherein X is as defined above. Polymers that may be mentioned in this respect include polyesters (e.g. polyhydroxyalkanoates or polyethylene terephthalates), polyethers (e.g. polyethylene glycol (PEG) or polypropylene glycol (PPG)), polyolefins (e.g. polyethylene or polypropylene) and other polymers (e.g. poly(vinyl chloride) or an acrylate polymer (such as poly(methyl methacrylate) and polyacrylonitrile)). Each polymer may, as indicated above, contain one or more X substituents covalently bonded to the polymer (e.g. a polyether which contains one or more additional nitrile substituents bonded to each polyether molecule), or the one or more X substituents may be part of the repeating polymer structure (e.g. polyacrylonitrile).

Optional substituents that may be mentioned in respect of the R groups in compounds of formula I include halogen atoms and C₁₋₄ alkyl groups.

In embodiments in which the functionalising compound is intended to covalently react with hydroxyl groups present on the GO, then it is preferred that X is -CN or -N=C=O. In embodiments in which the functionalising compound is intended to covalently react with epoxide or carboxylic acid groups present on the GO, then it is preferred that X is -N(R^{a})R^{b b} (preferably wherein at least one of R^{a} and R^{b} is hydrogen).

In other embodiments, the compound of formula I may be first converted into a different chemical form (e.g. by converting the X component into a different functional group *in situ*) before it is reacted with the GO. For example, where the compound of formula I is an aryl amine or heteroaryl amine, the amine group may be converted into a diazonium group (e.g. to facilitate an electrophilic substitution reaction) prior to reaction with the GO. The diazonium group may be formed by any method known to the person skilled in the art (e.g. using nitrous acid in the presence of a strong acid).

In embodiments in which X is a boronic acid, the compound of formula I may be reacted with the hydroxyl groups present on the GO by any means known to the skilled person.

In a preferred embodiment, the functionalising compound is selected from the group consisting of substituted or un-substituted C₁₋₁₂ alkyl cyanide, heteroalkyl cyanide, cycloalkyl cyanide, heterocycloalkyl cyanide, C₂₋₁₂ alkenyl cyanide, heteroalkenyl cyanide, C₂₋₁₂ alkynyl cyanide, heteroalkynyl cyanide, aryl cyanide, heteroaryl cyanide, a C₁₋₁₂ alkyl amine, C₂₋₁₂ alkenyl amine, an aryl amine and a heteroaryl amine. Optional substituents that may be mentioned in this respect include halogen atoms and C₁₋₄ alkyl groups. In an aspect of the invention the functionalising compound is an optionally substituted heteroaryl amine, or preferably an optionally substituted heteroaryl cyanide.

In other preferred embodiments, the functionalising compound is a compound of formula I in which X represents -CN.

Unless otherwise stated, the terms C_{1-q} alkyl groups (where q is the upper limit of the range) defined herein may be straight-chain or, when there is a sufficient number of carbon atoms, be branched-chain. Similarly C_{2-q} alkenyl groups and C_{2-q} alkynyl groups may be straight-chain or, when there is a sufficient number of carbon atoms, be branched-chain.

Cycloalkyl groups that may be mentioned may be monocyclic or bicyclic alkyl groups, which cycloalkyl groups may further be bridged (so forming, for example, fused ring systems such as three fused cycloalkyl groups). Such cycloalkyl groups may be saturated or unsaturated containing one or more double or triple bonds (forming for example a cycloalkenyl or cycloalkynyl group). Substituents may be attached at any point on the cycloalkyl group. Further, where there is a sufficient number (i.e. a minimum of four) such cycloalkyl groups may also be part cyclic.

A heteroalkyl group is an alkyl group in which at least one (e.g. one) of the carbon atoms in the backbone has been replaced with a heteroatom (preferably selected from N, O and S). At least one carbon atom remains in the backbone in addition to the one or more heteroatoms. Such heteroalkyl groups may be straight-chain or, when there is a sufficient number of atoms, be branched-chain. Heteroalkenyl and heteroalkynyl groups are corresponding variants of alkenyl groups and alkynyl groups, i.e. variants in which at least one (e.g. one) of the carbon atoms in the backbone has been replaced with a heteroatom (preferably selected from N, O and S), but at least two adjacent carbon atoms remain thus affording the required unsaturation.

Heterocycloalkyl groups that may be mentioned include non-aromatic monocyclic and bicyclic heterocycloalkyl groups in which at least one (e.g. one to four) of the atoms in the ring system is other than carbon (i.e. a heteroatom), and in which the total number of atoms in the ring system is from five to ten. Such heterocycloalkyl groups may also be bridged. Further, such heterocycloalkyl groups may be saturated or unsaturated containing one or more double and/or triple bonds, forming for example a heterocycloalkenyl (where q is the upper limit of the range) or a heterocycloalkynyl group.

Aryl groups that may be mentioned include C₆₋₁₀ aryl groups. Such groups may be monocyclic or bicyclic and have from 6 to 10 ring carbon atoms, in which at least one ring is aromatic. C₆₋₁₀ aryl groups include phenyl, naphthyl and the like, such as 1,2,3,4-tetrahydronaphthyl. The point of attachment of aryl groups may be *via* any atom of the ring system. However, when aryl groups are bicyclic, they are linked to the rest of the molecule *via* an aromatic ring.

Unless otherwise specified, the term "heteroaryl" when used herein refers to an aromatic group containing one or more heteroatom(s) (e.g. one to four heteroatoms) preferably selected from N, O and S. Heteroaryl groups include those which have from 5 to 10 members and may be monocyclic or bicyclic, provided that at least one of the rings is aromatic (so forming, for example, a mono- or bicyclic heteroaromatic group). However, when heteroaryl groups are bicyclic or tricyclic, they are linked to the rest of the molecule *via* an aromatic ring. Heteroaryl groups that may be mentioned include pyrimidine, pyrazine, pyridazine and, preferably, pyridine.

The terms "halo", "halogen" and "halide", when used herein, include fluoro, chloro, bromo and iodo.

In embodiments of the invention which involve reacting GO with a functionalising compound using a diazonium-based reaction, and reacting the graphene oxide derivative with ascorbic acid, or a salt, solvate or derivative thereof, it may be necessary to isolate the graphene oxide derivative from the mixture obtained in the first step (the functionalisation step) before reacting it with the ascorbic acid, or a salt, solvate or derivative thereof.

In an aspect of the invention, forming the graphene oxide derivative is performed in the presence of a strong acid. Examples of suitable inorganic acids include, but are not limited to, hydrochloric acid (HCl), nitric acid (HNO₃), phosphoric acid (H₃PO₄), sulphuric acid (H₂SO₄), boric acid (H₃BO₃), hydrofluoric acid (HF), hydrobromic acid (HBr), and perchloric acid (HClO₄). Examples of suitable organic acids include, but are not limited to, halogenated acetic acid (e.g. trifluoracetic acid or trichloroacetic acid), methane sulfonic acid, trifluoromethane sulfonic acid, p-toluenesulfonic acid and aminomethylphosphonic acid.

In the process of the invention, the contact time between the graphene oxide, the functionalising compound and strong acid for forming the graphene oxide derivative, will typically be from about 0.5 seconds to about 24 hours, e.g. from about 10 minutes to about 2 hours, such as about 1 hour.

After the process for forming the graphene oxide derivative has been conducted, the contact time between the graphene oxide derivative mixture, obtained by contacting the graphene oxide, the functionalising compound and strong acid, and the reducing agent will typically be from about 0.5 seconds to about 24 hours, e.g. from about 1 second to about 10 minutes, such as 5 minutes.

The person skilled in the art would appreciate that the contact time may vary depending on whether the contacting is being done on a laboratory scale or on a larger industrial scale and would be able to adjust the contacting times accordingly.

The method of the disclosure may be carried out at atmospheric, sub- or super-atmospheric pressure, preferably atmospheric pressure.

The method of the present disclosure may be conducted at any temperature. Typically, the method of the disclosure is typically conducted at about room temperature (i.e. about 25°C). However, it is to be understood that the method may be conducted at higher or lower temperatures, such as from about -40°C to about 200°C, for example from about 0°C to about 100°C or from about 20°C to about 60°C. The functionalising reactions described herein are preferably conducted at about room temperature. The reduction reactions may, however, be conducted at a different temperature (e.g. at from about 40°C to about 70°C (e.g. about 60°C)). It would be appreciated by the skilled person that the reaction temperature may depend on the type of reaction being performed and the functional groups present and would modify the temperature ranges accordingly.

During the process of the invention, the components of the process are typically mixed together to facilitate the reaction process. Effective mixing techniques include, but are not limited to, shaking and/or stirring. For example, a chemical reactor may be equipped with a stirring unit to enable the solutions to be mixed on a large scale.

In an aspect of the process of the invention, the process of forming the graphene oxide derivative and reducing the graphene oxide derivative is conducted in a "one-pot" procedure. By the term "one-pot" we mean that the graphene oxide derivative is not isolated from the reaction before being reduced.

One-pot procedures may be advantageous because, if the Pinner reaction is used for the functionalisation, for example, there is no need to isolate the graphene oxide derivatives or change the pH of the crude reaction mixture before introducing the ascorbic acid or other reducing agent.

In the process of the invention, the pH is typically less than about 4, such as less than about 2, or less than about 1. For example, the pH may be from about 0 to about 3, or from about 0 to about 2, or from about 0 to about 1.

Typically the process of the invention is conducted in the presence of an aqueous solvent system. For example, the process of the invention may be conducted in the presence of water. In embodiment in which a different solvent is present (e.g. in addition to the water), it is preferred that the additional solvent is a polar organic solvent, such as methanol or ethanol. In certain embodiments, it may be necessary to reduce the level of organic solvent that is present in the reaction mixture prior to conducting the reduction step with ascorbic acid.

For the avoidance of doubt, in this specification when we use the term comprising or comprises we mean that the composition or formulation or component being described must contain the listed ingredient(s) but may optionally contain one or more additional ingredients. When we use the term consisting essentially of or consists essentially of we mean that the composition or formulation or component being described must contain the listed ingredient(s) and may also contain other small (for example up to 5% by weight, or up to 1% by weight or up to 0.1% by weight) ingredients, provided that any additional ingredients do not affect the essential properties of the composition, formulation or component. When we use the term consisting of or consists of we mean that the composition, formulation or component being described must contain the listed ingredient(s) only with no detectable amounts of other ingredients.

Wherever the word "about" is employed herein in the context of ratios amounts (e.g. relative amounts of individual constituents in a composition or a component of a composition), temperatures, pressures, times, pH values, concentrations, it will be appreciated that such variables are approximate and as such may vary by ± 10%, for example ± 5% and preferably ± 2% (e.g. ± 1 %) from the numbers specified herein.

The present invention also provides a reduced graphene oxide or reduced graphene oxide derivative obtainable by the process of the invention described herein.

The reduced graphene oxide or reduced graphene oxide derivative prepared by the process of the invention may be dispersed into organic solvents without the need for any additional surfactants or other additives. Typically solvents in which the reduced graphene oxide or reduced graphene oxide derivative may be dispersed include, but are not limited to, dimethylformamide (DMF), water, N-methyl-2-pyrrolidone (NMP), chloroform, toluene, chlorobenzenes, or ethylene glycol. Mixtures of solvents might be used too for the dispersion reduced graphene oxide or reduced graphene oxide derivatives.

It is envisaged that by dispersing the reduced graphene oxide or reduced graphene oxide derivative in a suitable solvent, the reduced graphene oxide or reduced graphene oxide derivative may be used in an ink, such as a printable ink, formulated with or without other suitable additives, for the deposition on a suitable substrate, either flexible or rigid, by using any technique including, but not limited to, gravure, roll-to-roll, screen, inkjet and flexographic printing, drop casting, filtration, spin coating, dip coating and spraying.

The present invention also provides an ink comprising the reduced graphene oxide or reduced graphene oxide derivative product of the process of the invention.

According to an aspect of the disclosure an electronic component including a graphene oxide composite obtained from the method disclosed herein is provided.

According to a further aspect, there is provided an apparatus for processing an aqueous solution comprising graphene oxide as defined previously, wherein the apparatus is configured to perform any of the methods described herein.

According to a further aspect, there is provided a computer recordable medium comprising a computer programme code stored thereon, the computer recordable medium and computer programme code being configured to, when run on at least one processor of a processing apparatus, cause the processing apparatus to provide for performing any of the methods described herein.

It will be appreciated to the skilled reader that any mentioned apparatus/device and/or other features of particular mentioned apparatus/device may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/functional units.

In some embodiments, a particular mentioned apparatus/device may be pre-programmed with the appropriate software to carry out desired operations, and wherein the appropriate software can be enabled for use by a user downloading a "key", for example, to unlock/enable the software and its associated functionality. Advantages associated with such embodiments can include a reduced requirement to download data when further functionality is required for a device, and this can be useful in examples where a device is perceived to have sufficient capacity to store such pre-programmed software for functionality that may not be enabled by a user.

It will be appreciated that any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

It will be appreciated that any "processing apparatus" described herein can comprise a collection of one or more individual processors/processing elements that may or may not be located on the same circuit board, or the same region/position of a circuit board or even the same device. In some embodiments one or more of any mentioned processors may be distributed over a plurality of devices. The same or different processor/processing elements may perform one or more functions described herein.

With reference to any discussion of any mentioned computer and/or processor and memory (e.g. including ROM, CD-ROM etc.), these may comprise a computer processor, Application Specific Integrated Circuit (ASIC), field-programmable gate array (FPGA), and/or other hardware components that have been programmed in such a way to carry out the inventive function.

The present disclosure includes one or more corresponding aspects, example embodiments or features in isolation or in various combinations whether or not specifically stated (including claimed) in that combination or in isolation. Corresponding means for performing one or more of the discussed functions are also within the present disclosure.

Preferences and options for a given aspect, feature or parameter of the invention should, unless the context indicates otherwise, be regarded as having been disclosed in combination with any and all preferences and options for all other aspects, features and parameters of the invention.

The present disclosure is now illustrated, but not limited by, the following Examples and Figures; in which;
Figure 1 shows an example arrangement for measuring the resistance of the reduced graphene oxide or reduced graphene oxide derivative;
Figure 2 shows an apparatus for processing an aqueous solution;
Figure 3 shows an example computer readable medium; and
Figure 4 shows an electronic component.

### Example 1 - One-pot Functionalisation and Reduction of Graphene Oxide

4-cyanopyridine (2.7g) was dissolved in 20mL of deionised water and 10mL of concentrated hydrochloric acid (HCl, 32%). An aqueous dispersion of graphene oxide (GO) (20mg/mL) was then added to the mixture, and the reaction stirred vigorously for 5 hours at room temperature and pH around 0. After 5 hours, half of the reaction mixture was subjected to work-up in order to isolate the graphene oxide derivative and to confirm its formation by suitable characterisation techniques including Fourier Transform Infrared (FTIR) spectroscopy.

L-ascorbic acid (2g) was added to the other half of the reaction mixture, the one which was not subjected to work-up, and the reaction was stirred vigorously at 60°C for 5 hours at pH around 0. After 5 hours the crude reaction mixture was filtered whilst still hot through a glass frit filter using vacuum filtration. The resulting solid was then washed with copious amounts of deionised water until the pH of the filtrate was 7. The solid was then washed with acetone and isopropanol. The final product (0.170g) was then dried under vacuum.

### Example 2 - Electrical Resistance Characterisation

The reduced graphene oxide derivative prepared in Example 1, was dispersed in DMF (1 mg/mL) to provide a reduced graphene oxide derivative ink. The ink was drop cast onto different geometries of printed silver electrodes in order to ascertain the electrical resistance.

For a comparison, a reduced graphene oxide ink, prepared by dispersing in DMF (1 mg/mL) reduced graphene oxide powder obtained by reducing a graphene oxide dispersion with L-ascorbic acid at pH around 4, was also drop cast and its electrical resistance tested. The graphene oxide was reduced using the same reduction method as used in the process of the invention except for the use of a higher pH. This higher pH affords a material which is less conductive (Table 1) and dispersible than the one obtained when the graphene oxide derivative of the graphene oxide are reduced at pH lower than 4.

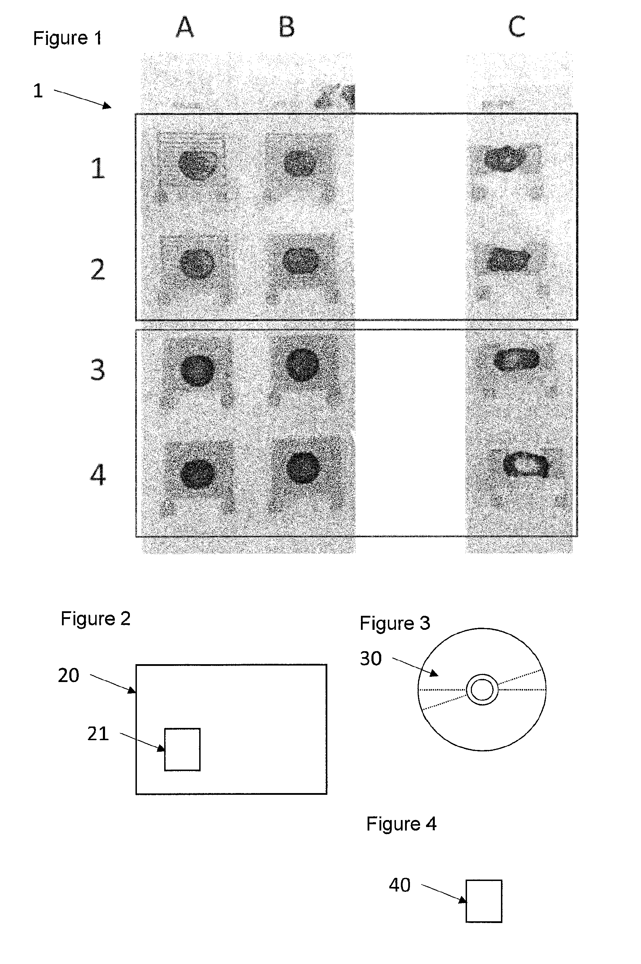

The resistance was measured using a silver electrode arrangement comprising interdigitated electrodes and two electrodes separated by a gap having drop cast ink obtained as detailed above applied thereon. Figure 1 shows the test electrode layouts 1 designated by A, B and C, as well as test number as explained below.

Electrode arrangement A comprises two columns of interdigitated electrodes with 400 micrometer gaps.

Electrode arrangement B comprises two columns of interdigitated electrodes with 300 micrometer gaps.

Electrode arrangement C comprises column electrodes with a 5mm gap.

The results obtained are shown in Table 1 below.

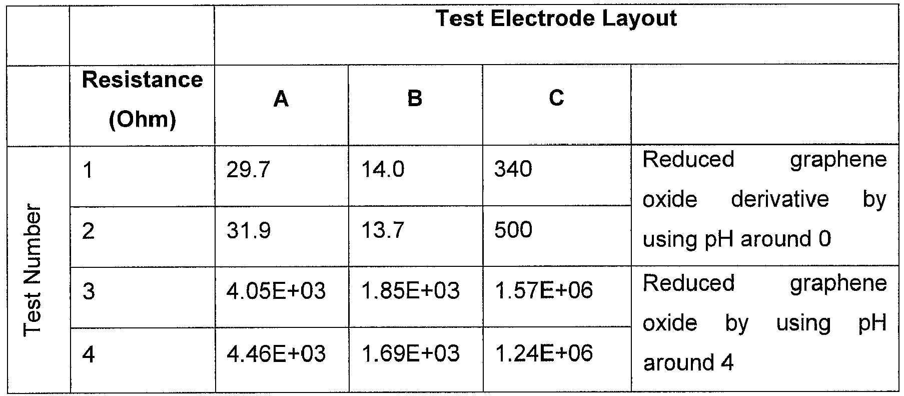

From those measurements the sheet resistance of the reduced graphene oxide derivative, reduced at very low pH, around 0, can be estimated to be ca. 400 Ohm per square.

The reduced graphene oxide, obtained at pH around 4, displays a sheet resistance approximately 3 orders of magnitude higher.

Figure 2 shows an apparatus 20 for processing an aqueous solution using the methods described herein, the apparatus 20 includes a processor and memory, shown together as 21, for controlling a chemical processing apparatus. Figure 3 shows a computer readable medium comprising a CD-ROM with computer program code thereon for execution on said processor and memory 21. Figure 4 shows an electrical component, such as a sensor 40, including the reduced graphene oxide obtained by the methods described herein.

## Claims

1. A process for preparing a reduced graphene oxide or a reduced graphene oxide derivative, which processes comprises reducing graphene oxide or a graphene oxide derivative with a reducing agent, wherein the process is conducted at a pH of less than about 4.

2. The process of claim 1, wherein the reducing agent is an organic compound.

3. The process of claim 1 or 2, wherein the reducing agent is ascorbic acid, or a salt, solvate or derivative thereof, or citric acid, or a salt, solvate or derivative thereof.

4. The process of any one of the preceding claims, wherein the process is conducted at a pH of less than about 2.

5. The process of claim 4, wherein the process is conducted at a pH of less than about 1.

6. The process of any one of the preceding claims, wherein the process further comprises the step of forming the graphene oxide derivative by reacting graphene oxide with a functionalising compound.

7. A process for preparing a reduced graphene oxide derivative, which process comprises the steps of:
(i) forming a graphene oxide derivative by reacting graphene oxide with a functionalising compound; and
(ii) reducing the functionalised graphene oxide using a reducing agent.

8. The process of claim 7, wherein the process of reducing the graphene oxide derivative is conducted at a pH of less than 4 or less than 2.

9. The process of any one of claims 6 to 8, wherein the process of forming the graphene oxide derivative and reducing the graphene oxide derivative are performed in a "one-pot" procedure.

10. The process of any one of claims 6 to 9, wherein the functionalising compound is:
(i) a polymer containing one or more X substituents; or
(ii) a compound of formula I,
R-X (I)
wherein R represents C₁₋₁₂ alkyl, C₂₋₁₂ alkenyl, C₂₋₁₂ alkynyl, heteroalkyl, heteroalkenyl, heteroalkynyl, cycloalkyl, heterocycloalkyl, aryl, heteroaryl, each of which is substituted or un-substituted;
X represents -CN, -N(R^{a})R^{b}, -N=C=O, a dienophile, a silane, or a boronic acid; R^{a} and R^{b} independently represent hydrogen or a C₁₋₆ alkyl group.

11. The process of any one of claims 6 to 10, wherein the functionalising compound is selected from the group consisting of C₁₋₁₂ alkyl cyanide, heteroalkyl cyanide, cycloalkyl cyanide, heterocycloalkyl cyanide, C₂₋₁₂ alkenyl cyanide, heteroalkenyl cyanide, C₂₋₁₂ alkynyl cyanide, heteroalkynyl cyanide, an aryl cyanide, a heteroaryl cyanide, a C₁₋₁₂ alkyl amine, C₂₋₁₂ alkenyl amine, an aryl amine and a heteroaryl amine, each of which is optionally substituted with one or more substituents selected from the group consisting of halogen atoms and C₁₋₄ alkyl groups.

12. The process of claim 11, wherein the functionalising compound is a heteroaryl cyanide optionally substituted with one or more substituents selected from the group consisting of halogen atoms and C₁₋₄ alkyl groups.

13. The process of any one of claims 6 to 12, wherein forming the graphene oxide derivative is performed in the presence of a strong acid.

14. A reduced graphene oxide or reduced graphene oxide derivative obtainable by the process defined in any one of the preceding claims.

15. An ink comprising the reduced graphene oxide or reduced graphene oxide derivative product of claim 14.
